(19) **Europäisches Patentamt**
**European Patent Office**
**Office européen des brevets**

(11) **EP 1 495 853 B1**

(12) **EUROPEAN PATENT SPECIFICATION**

(45) Date of publication and mention
of the grant of the patent:
**22.06.2011 Bulletin 2011/25**

(51) Int Cl.:
**B29C 49/18** *(2006.01)* **B29C 49/64** *(2006.01)*

(21) Application number: **03715767.4**

(22) Date of filing: **04.04.2003**

(86) International application number:
**PCT/JP2003/004337**

(87) International publication number:
**WO 2003/084734 (16.10.2003 Gazette 2003/42)**

(54) **PROCESS FOR PRODUCING A HEAT RESISTANT POLYESTER CONTAINER**

VERFAHREN ZUR HERSTELLUNG EINES WÄRMEBESTÄNDIGEN POLYESTERBEHÄLTERS

PROCEDE DE FABRICATION D'UN CONTENANT DE POLYESTER THERMO-RESISTANT

(84) Designated Contracting States:
**AT BE BG CH CY CZ DE DK EE ES FI FR GB GR HU IE IT LI LU MC NL PT RO SE SI SK TR**

(30) Priority: **05.04.2002 JP 2002103728**

(43) Date of publication of application:
**12.01.2005 Bulletin 2005/02**

(73) Proprietor: **Toyo Seikan Kaisha, Ltd.**
**Tokyo 100-0011 (JP)**

(72) Inventors:
 • **HIROTA, Norihisa**
 **Yokohama-shi,**
 **Kanagawa 240-0062 (JP)**

 • **SHIBATA, Satoshi**
 **Yokohama,**
 **Kanagawa 240-0062 (JP)**

(74) Representative: **Bailey, David Martin**
**Brookes Batchellor,**
**102-108 Clerkenwell Road**
**London EC1M 5SA (GB)**

(56) References cited:
 **EP-A- 1 155 807 JP-A- 9 118 322**
 **US-A- 5 445 784 US-A- 6 080 353**

**Description**

Technical Field

The present invention relates to a heat-resistant polyester container obtained by biaxially draw-blow-molding a preform of a polyester resin such as a polyethylene terephthalate and to a method of producing the same. More particularly, the invention relates to a polyester container for executing the retort-sterilization after the content has been filled with a content and sealed.

Background Art

Polyester containers in the form of wide-mouthed bottles obtained by heating a preform of a polyester resin such as a polyethylene terephthalate at a temperature of not lower than a glass transition point (Tg) but not higher than a heat crystallization temperature followed by the biaxial draw-blow molding, have been widely used for containing a variety kinds of foods, seasonings and beverages owing to their excellent transparency, shock resistance and gas barrier property.

To impart the heat resistance to the polyester container, in general, the mouth portion of the preform of a polyester resin is suitably heated so as to be crystallized, and is crystallized by the biaxial draw-blow molding, and is, further, heat-set at a temperature of not lower than the crystallization temperature to remove distortion caused by the secondary draw-blow molding. When placed under a temperature condition of not lower than 70°C, however, the obtained polyester container is conspicuously deformed due to the contraction by heating.

To further impart the heat resistance to the polyester container, there has been proposed a method according to which the mouth portion of the preform of a polyester resin is suitably heated so as to be crystallized, the preform is biaxially draw-blow-molded by using a primary blow mold to obtain a primary intermediate molded article which is, then, heated to a sufficient degree in a shrink oven to obtain a secondary intermediate molded article, and the secondary intermediate molded article is biaxially draw-blow-molded by using a secondary blow mold (see, for example, Japanese Examined Patent Publication (Kokoku) No. 7-67732, corresponding to US-A-5445784).

According to this method, the primary intermediate molded article biaxially draw-blow-molded by the primary blow-molding is heated to forcibly form a secondary intermediate molded article by contraction, which is, then, blow-molded into the shape of a bottle without almost being draw-deformed.

In order to prevent expansion due to heat at the time of sterilization and to prevent deformation due to a reduction in the pressure after the sterilization, however, the barrel portion of the heat-resistant polyester container must form a variety of structures such as reduced pressure-absorbing panels (mirror portions) and reinforcing structures such as reinforcing beads and ribs. According to the method of blow-molding a bottle without almost draw-deforming the secondary intermediate molded article proposed in the above Japanese Examined Patent Publication (Kokoku) No. 7-67732, however, it is not possible to form the reduced pressure-absorbing panels or the reinforcing beads in the barrel portion of the polyester container.

In particular, it is not possible to form the reduced pressure-absorbing panels or the reinforcing beads in the polyester containers that must be retort-sterilized at high temperatures of not lower than 100°C and, particularly, at 120°C for 20 to 50 minutes after they have been filled with the contents, i.e., filled with foods such as infant's foods and beverages such as coffee with milk.

According to the above method, further, the secondary intermediate molded article and the final container have the same size or nearly the same size. In biaxially draw-blow-molding the secondary intermediate molded article by using the secondary metal mold, therefore, there occurs a so-called mold nipping; i.e., the surface of the secondary intermediate molded article is nipped by the secondary blow mold.

The present applicant has previously proposed a polyester container having an endothermic peak at the bottom portion of not lower than 150°C but not higher than a melt starting point on a DSC curve by giving attention to the deformation and whitening of the bottom portion during the retort-sterilization at a high temperature and a method of producing the same (Japanese Unexamined Patent Publication (Kokai) No. 2001-150522). However, this method, too, still leaves a problem of deformation in the barrel portion during the retort-sterilization.

EP-A-1155807 describes a method for moulding a laminated polyester resin container.

Disclosure of the Invention

It is an object of the present invention to provide a polyester container having a high heat resistance, which features an excellent heat resistance, which enables the retort-sterilization to be effected at a high temperature after it has been filled with food or beverage and sealed, and which does not permit the barrel portion of the container to be deformed even after the retort-sterilization processing, and a method of producing the same.

According to the present invention, there is provided a method of producing a heat-resistant polyester container as defined in claim 1.

In the method of producing the polyester container of the present invention, it is desired that the polyester container that is obtained has reduced pressure-absorbing panels in the barrel portion, and the thickness reduction ratio is a value in the pole portions among the reduced pressure-absorbing panels formed in the barrel portion.

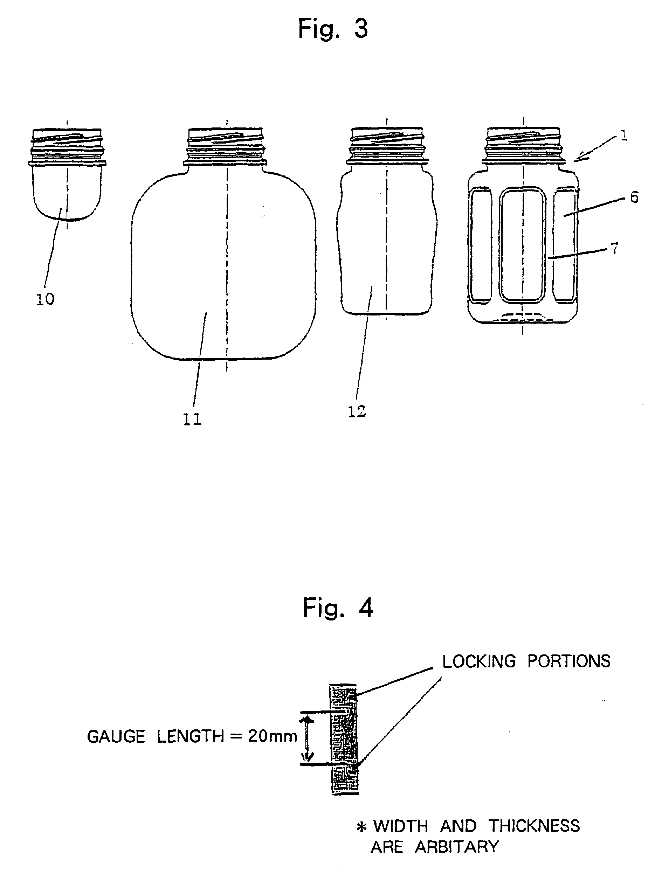

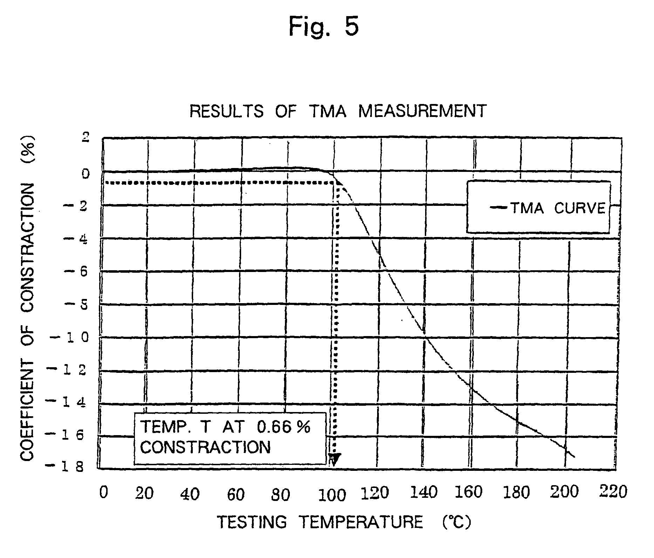

In the heat-resistant polyester container of the invention, the coefficient of contraction and the temperature T are so defined that the temperature is that of when the coefficient of contraction is 0.66%, the coefficient of contraction being expressed by the above formula (1) from the results (Fig. 5) obtained by biaxially draw-blow-molding and heat-setting the heat contracted secondary intermediate molded article by using a secondary metal mold to obtain a polyester container, and cutting the barrel portion of the polyester container into a test piece having a gauge length of 20 mm as shown in Fig. 4, and measuring the coefficient of contraction of the test piece by the thermomechanical analysis (simply referred to as TMA) without pre-loading while elevating the temperature at a rate of 3°C/min after 30°C is exceeded.

In particular, it is desired that the coefficient of contraction and the temperature T at that moment are values in the pole portions among the reduced pressure-absorbing panels formed in the barrel portion. The pole portions among the reduced pressure-absorbing panels have a heat resistance inferior to that of the reduced pressure-absorbing panels. Therefore, by taking a measurement at these portions, the heat-resistant polyester container of the present invention explicitly exhibits the superiority.

If the temperature T is not lower than 120°C at a moment when the coefficient of contraction is 0.66%, the volume coefficient of contraction of the polyester container can be lowered to be, for example, not larger than 2%. That is, if the temperature T is not lower than 120°C at a moment when the coefficient of contraction is 0.66%, it means that the barrel portion of the heat contracted secondary intermediate molded article is biaxially drawn to a sufficient degree and is heat-set by the secondary metal mold at the time of the secondary blow-molding, exhibiting greatly improved heat resistance as compared to the conventional polyester container. It is, therefore, made possible to effect the retort-sterilization processing at a temperature of not lower than 100°C and, particularly, not lower than 120°C after the container has been filled with a food such as infant's food or a beverage such as coffee with milk.

If the temperature T is lower than 120°C at a moment when the coefficient of contraction is 0.66%, on the other hand, the heat resistance becomes poor and can no longer sufficiently withstand the retort-sterilization at high temperatures as described above.

The coefficient of contraction of 0.66% is used as a criterion. This is because a maximum coefficient of contraction of about 0.66% is the criterion whether the heat-resistant polyester container can be put to a practical use. If the coefficient of contraction is lower than the above value even at temperatures higher than 120°C which is a retort-sterilization temperature, it is obvious that excellent heat resistance is exhibited.

In the method of producing the heat-resistant polyester container of the invention, further, if the thickness reduction ratio of the barrel portion becomes smaller than 5%, the temperature T becomes lower than 120°C at a moment when the coefficient of contraction is 0.66% and the obtained polyester container exhibits an inferior heat resistance giving rise to the occurrence of defective molding such as nipping by the mold during the blow-molding and the occurrence of wrinkles. If the thickness reduction ratio exceeds 30%, on the other hand, there occur such problems as rupture during the secondary blow-molding and deformation after the container is taken out.

Concerning the thickness reduction ratio, it is desired that the thickness $t_2$ of the barrel portion of the polyester container is a value in the pole portions among the reduced pressure-absorbing panels formed in the barrel portion. The pole portions among the reduced pressure-absorbing panels are thicker than the reduced pressure-absorbing panels. Therefore, by taking a measurement at these portions, superiority is explicitly exhibited by the method of producing a heat-resistant polyester container of the present invention.

Brief Description of the Drawings

Fig. 1 is a side view illustrating a heat-resistant polyester container of the present invention;
Fig. 2 is a side view illustrating another heat-resistant polyester container of the present invention;
Fig. 3 is a view illustrating a method of producing a heat-resistant polyester container according to the present invention;
Fig. 4 is a view illustrating a test piece used for measuring the coefficient of contraction in compliance with TMA; and
Fig. 5 is a diagram of a TMA curve illustrating the results of TMA measurement.

Best Mode for Carrying Out the Invention

[Polyester Container]

The heat-resistant polyester container of the present invention has a feature in that the temperature T is not lower than 120°C when the coefficient of contraction of the barrel portion represented by the above formula (1) is 0.66%.

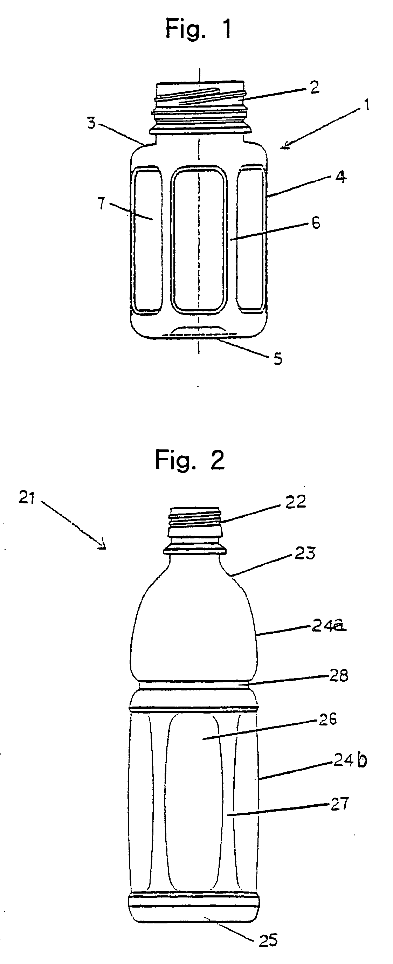

The heat-resistant polyester container of the present invention may be in the form of a wide-mouthed bottle-like container shown in Fig. 1 or a bottle-like container shown in Fig. 2, though they are not to limit the invention.

The wide-mouthed polyester container 1 shown in Fig. 1 comprises a wide mouth portion 2, a shoulder portion 3, a barrel portion 4 and a bottom portion 5. Reduced pressure-absorbing panels 6 are formed in the barrel portion. The polyester container has the mouth portion 2 crystallized by the heat treatment, and has the shoulder portion 3, barrel portion 4 and bottom portion 5 heat-set by a secondary metal mold that will be described later, and has a temperature T of not lower than 120°C at a moment when the coefficient of contraction of the pole portions 7 among the reduced pressure-absorbing panels 6 in the barrel portion 4 is 0.66%.

The polyester container 21 of the present invention shown in Fig. 2 is in the form of a bottle and comprises a mouth portion 22, a shoulder portion 23, an upper barrel portion 24a, a lower barred portion 24b and a bottom portion 25. Reduced pressure-absorbing panels 26 and pole portions 27 are formed in the lower barrel portion 24b, and a reinforcing recessed bead 28 is formed in a boundary portion between the upper barrel portion 24a and the lower barrel portion 24b. In the container illustrated in Fig. 2, too, the temperature T is not lower than 120°C at a moment when the coefficient of contraction in the pole portions 27 among the reduced pressure-absorbing panels 26 is 0.66%.

As the material constituting the polyester container of the invention, there can be used any polyester resin provided it can be biaxially draw-blow molded and crystallized; i.e., there can be used thermoplastic polyesters of the type of ethylene terephthalate, polyesters such as polybutylene terephthalate and polyethylene naphthalate, or a blend of polyesters thereof and a polyolefin, polycarbonate or an arylate resin. In the ethylene terephthalate-type thermoplastic polyester used for the polyester container of the present invention, the ethylene terephthalate unit occupies most of, generally, not less than 70 mol% of and, particularly, not less than 80 mol% of the ester recurring unit, and a thermoplastic polyester resin is preferably used having a glass transition point (Tg) of 50 to 90°C and, particularly, 55 to 80°C and a melting point (Tm) of 200 to 275°C and, particularly, 220 to 270°C.

As the thermoplastic polyester resin, there can be preferably used a homopolyethylene terephthalate from the standpoint of heat resistance. However, there can be further used a copolymerized polyester containing an ester unit in small amounts other than the ethylene terephthalate unit.

As the dibasic acid other than the terephthalic acid, there can be exemplified aromatic dicarboxylic acids such as isophthalic acid, phthalic acid, and naphthalenedicarboxylic acid; alicyclic dicarboxylic acids such as cyclohexanedicarboxylic acid; and a combination of one or two or more of aliphatic dicarboxylic acids such as succinic acid, adipic acid, sebacic acid and docanedioic acid.

As the diol component other than the ethylene glycol, there can be exemplified propylene glycol, 1,4-butanediol, diethylene glycol, 1,6-hexelyne glycol, cyclohexanedimethanol, and one or two or more kinds of ethylene oxide adducts of bisphenol A.

There can be further used a composite material obtained by blending the ethylene terephthalate-type thermoplastic polyester with, for example, a polyethylene naphthalate, a polycarbonate or a polyarylate having a relatively high glass transition point in an amount of about 5 to about 25% to thereby increase the strength of the material of when the temperature is elevated. It is further allowable to use a polyethylene terephthalate and the above-mentioned material having a relatively high glass transition point in a laminated form. As required, further, the polyester resin may be blended with a lubricant, a reforming agent, a pigment and an ultraviolet ray-absorbing agent.

The ethylene terephthalate-type thermoplastic polyester used in the present invention should at least have a molecular weight large enough for forming a film, and is of the injection grade or of the extrusion grade depending upon the applications. Desirably, its inherent viscosity is in a range of 0.6 to 1.4 dl/g and, particularly, 0.63 to 1.3 dl/g.

The polyester container of the present invention can be constituted by a single layer of the above-mentioned polyester resin, but may also be constituted by a multiplicity of layers forming a gas barrier layer as an intermediate layer between the polyester resin layers which are forming the inner layer and the outer layer.

As the thermoplastic resin constituting the gas barrier layer, there can be used, for example, an ethylene/vinyl alcohol copolymer, a polyamide, a polyvinylidene chloride resin, a polyvinyl alcohol or a fluorine-contained resin.

As a particularly preferred gas barrier resin, there can be exemplified a saponified product of an ethylene/vinyl acetate copolymer obtained by saponifying an ethylene/vinyl acetate copolymer containing ethylene in an amount of 20 to 60 mol% and, particularly, 25 to 50 mol% such that the degree of saponification is not smaller than 96 mol% and, particularly, not smaller than 99 mol%.

Other preferred gas barrier resins may be polyamides having amide groups in a number of 5 to 50 and, particularly, 6 to 20 per 100 carbon atoms, such as nylon 6, nylon 6,6, nylon 6/6, 6 copolymer, metaxylene adipamide (MXD6), nylon 6, 10, nylon 11, nylon 12, nylon 13, etc.

When the polyester container of the invention is constituted by a single layer of a polyester resin, the polyester resin may be blended with an oxidizing organic component and a transition metal catalyst such as cobalt to impart an oxygen-trapping function of the oxidizing organic component by the oxidation of the transition metal catalyst. As the oxidizing organic component, there can be used a polyamide and, particularly, a xylylene group-containing polyamide.

In the multi-layer structure comprising the inner and outer layers of the polyester resin and the intermediate layer of the gas barrier layer, further, the resin constituting the gas barrier layer may be the one having oxygen-absorbing property to impart oxygen-absorbing property to the gas barrier layer. The resin may be the one which utilizes the oxidation reaction of the resin, e.g., an oxidizing organic material such as polybutadiene, polyisoprene, polypropylene or ethylene/carbon oxide copolymer, and the one obtained by mixing polyamides such as 6-nylon, 12-nylon or metaxylylenediamine (MX) nylon with organic acid salts containing a transition metal such as cobalt, rhodium or copper as an oxidizing catalyst, and a photosensitizer such as benzophene, acetophene or chloroketones. When the oxygen-absorbing material is used, the effect can be exhibited to a more enhanced degree upon the irradiation with a ray of high energy, such as ultraviolet rays or electron rays.

Further, the gas barrier resin constituting the gas barrier layer may contain an oxidizing organic component to produce oxygen-absorbing property without deteriorating the gas barrier property caused by the deterioration of the gas barrier layer due to oxidation. As the oxidizing organic component, it is desired to use a polyene polymer derived from a polyene, and it is desired that a carboxylic acid, a carboxylic anhydride group or a hydroxyl group has been introduced thereto. As the functional group, there can be exemplified an acrylic acid, a methacrylic acid, a maleic acid, an unsaturated carboxylic acid, an anhydrous maleic acid or an anhydride of unsaturated carboxylic acid. As the transition metal catalyst, cobalt is preferred.

There can be further used, as a chief component, a combination of the above-mentioned gas barrier resin constituting the gas barrier layer with one or two or more of metal powders having reducing property, such as a reducing iron powder, reducing zinc, a reducing tin powder, a metal low oxide and a reducing metal compound, which, as required, can also be used in combination with an assistant such as a hydroxide, a carbonate, a sulfite, an organic acid salt or a halide of an alkali metal or an alkaline earth metal, or active carbon or active alumina. There can be further used a high molecular compound having a polyhydric phenol in the skeleton, such as a polyhydric phenol-containing phenol/aldehyde resin. The oxygen-absorbing agent, usually, has an average particle size of not larger than 10 $\mu$m and, particularly, not larger than 5 $\mu$m to maintain transparency or semi-transparency.

The gas barrier resin layer, oxygen-absorbing resin and oxygen-absorbing material may be blended with a filler, a coloring agent, a heat stabilizer, an aging stabilizer, an anti-oxidizing agent, an anti-aging agent, a photo stabilizer, an ultraviolet ray absorber, an antistatic agent, a lubricant such as a metal soap or a wax, and a reforming agent.

In employing the multi-layer constitution, further, an adhesive or an adhesive layer may be interposed among the resin layers.

[Method of producing the polyester container]

According to the present invention, a method of producing a heat-resistant polyester container comprises biaxially draw-blow-molding a preform of a polyester resin by using a primary metal mold to obtain a primary intermediate molded article, contracting the primary intermediate molded article by heating to obtain a secondary intermediate molded article, and biaxially draw-blow-molding and heat-setting the secondary intermediate molded article by using a secondary metal mold heated at 150 to 210°C, so that the thickness reduction ratio of the barrel portion expressed by the above-mentioned formula (2) is not smaller than 5%.

Fig. 3 is a view illustrating the method of producing a heat-resistant polyester container of the present invention shown in Fig. 1. Namely, as illustrated in Fig. 3, the heat-resistant polyester container 1 of the present invention is obtained by crystallizing the mouth portion of a preform 10 of a polyester resin by a suitable heating means to impart heat resistance to the mouth portion, heating the preform at a temperature higher than a glass transition point (Tg), for example, at 95 to 115°C, biaxially draw-blow molding the preform by a primary metal mold to obtain a primary intermediate molded article 11 (step of primary blow), contracting the primary intermediate molded article 11 by heating to obtain a secondary intermediate molded article 12 from which the distortion formed by the biaxial draw-blow molding is removed (step of contraction by heating), and biaxially draw-blow-molding and heat-setting the secondary intermediate molded article 12 by a secondary metal mold heated at 150 to 210°C, so that the thickness reduction ratio of the barrel portion expressed by the above formula (2) is not smaller than 5% and, preferably, 5 to 30% (step of secondary blow/heat set). In the embodiment illustrated in Fig. 3, it is desired that the reduced pressure-absorbing panels 6 and the pole portions 7 are formed in the barrel portion, and the thickness reduction ratio expressed by the above formula (2) is a value in the pole portions 7.

When the temperature is the same at the portions corresponding to the barrel portion and to the bottom portion of the primary intermediate molded article obtained by the molding, it is desired that the temperature of the primary metal mold in the step of primary blow is from room temperature to 250°C. When the temperature of the metal mold exceeds 250°C, the material melts and the parting becomes defective.

It is desired that the temperatures of the primary metal mold are different at portions corresponding to the barrel portion and to the bottom portion of the primary intermediate molded article obtained by the molding, from the standpoint of stabilizing the contraction from the neck portion through up to the barrel portion. In this case, it is desired that the temperature of the portion corresponding to the barrel portion is 70 to 250°C. When the temperature is lower than 70°C, the heating is not enough to stabilize the contraction to a sufficient degree. When the temperature exceeds 250°C, on the other hand, the material melts and the parting becomes defective. It is desired that the temperature of the portion corresponding to the bottom portion is from room temperature to 250°C. When the temperature exceeds 250°C, the material melts and the parting becomes defective.

It is desired that the drawing ratio in the step of primary blow is, generally, 1.5 to 5 times in the longitudinal direction, 1 to 4 times in the transverse direction, and 3 to 20 times in terms of the area ratio. In the case of the wide-mouthed polyester container shown in Fig. 1, in particular, it is desired that the drawing ratio is 2 to 4 times in the longitudinal direction, 1 to 3.5 times in the transverse direction, and 4 to 20 times in terms of the area ratio. In the case of the polyester bottle as shown in Fig. 3, it is desired that the drawing ratio is 2.5 to 4 times in the longitudinal direction, 1 to 4 times in the transverse direction, and 4 to 13 times in terms of the area ratio.

The heating conditions in the step of contraction by heating are such that the average temperature on the surface is controlled to be from 100 to 250°C. When the average temperature is lower than 100°C, the shape cannot be imparted to a sufficient degree during the draw-blow molding by using the secondary metal mold. When the average temperature exceeds 250°C, the material melts and ruptures in the secondary blow, causing the whitening due to heat crystallization.

It is desired that the temperatures of the secondary metal mold in the step of secondary blow/heat set are 150 to 210°C at portions corresponding to the barrel portion and to the bottom portion of the secondary intermediate molded article. When the temperature is lower than 150°C, the stress of molding is not relaxed to a sufficient degree and the desired heat resistance is not obtained. When the temperature exceeds 210°C, on the other hand, the parting becomes defective, causing deformation and defective appearance when the polyester container is taken out.

As required, further, a cooling blow is effected with the air of 20 to 25°C for 0.5 seconds to 3 seconds to prevent the deformation at the time of taking the polyester container from the secondary metal mold.

It is desired that the drawing ratio in the step of secondary blow is, generally, 1 to 1.2 times in the longitudinal direction, 1.05 to 1.3 times in the transverse direction, and it is 1.05 to 1.3 times in terms of the area ratio according to the invention. In the case of the wide-mouthed polyester container shown in Fig. 1, in particular, it is desired that the drawing ratio is 1 to 1.1 times in the longitudinal direction, 1.05 to 1.2 times in the transverse direction, and 1.05 to 1.15 times in terms of the area ratio. In the case of the bottle-like polyester container as shown in Fig. 3, it is desired that the drawing ratio is 1 to 1.1 times in the longitudinal direction, 1.05 to 1.25 times in the transverse direction, and 1.05 to 1.2 times in terms of the area ratio.

The heat set is effected in the secondary blow metal mold for 1 to 5 seconds.

In subjecting the preform of a polyester resin to the biaxial draw-blow molding by using a primary metal mold, to the contraction by the heat treatment and to the biaxial draw-blow molding by using a secondary metal mold, there have been proposed a variety of temperatures based on the primary metal mold, secondary metal mold and contraction by the heat treatment. In order to obtain a highly heat-resistant polyester container of which the barrel portion does not deform even after the retort-sterilization processing at a high temperature of not lower than 100°C and, particularly, at 120°C for 20 to 50 minutes after having been filled with food such as infant's food or beverage such as coffee with milk, it is important in the present invention to adjust the drawing ratios in the step of primary blow and in the step of secondary blow and to adjust the time for contraction by heating in the shrink oven, such that the thickness reduction ratio expressed by the above formula (2) is not smaller than 5% and, preferably, 5% to 30% at the time of biaxially draw-blow-molding and heat-setting the thermally contracted secondary intermediate molded article by using the secondary metal mold.

In the method of producing the polyester container of the invention, a preform corresponding to the shape of a preform metal mold for injection is produced by using a conventional injection-molding machine.

In the case of the multi-layer constitution, a multi-layer preform corresponding to the shape of a preform metal mold for injection is produced by using a co-injection molding machine to form the inner and outer layers of the polyester resin and to insert one or more intermediate layers between the inner layer and the outer layer. A multi-layer preform can be, further, produced by using a multi-stage injection machine by, first, injection-molding a primary preform of a polyester resin by using a primary metal mold, transferring the primary preform into a secondary metal mold in which a resin for constituting an intermediate layer is injected onto the surface thereof to obtain a secondary preform, and transferring the secondary preform to a tertiary metal mold in which a polyester resin is injected onto the surface thereof to form an outer layer.

A preform can be further produced by the compression-molding. In this case, a molten resin mass is fed into a female mold without substantially decreasing the temperature and is compression-molded by a male mold. In the case of forming a multiplicity of layers, a resin for forming the intermediate layer is provided in the molten resin mass that constitutes the inner and outer layers, and the molten resin mass is fed to the female mold without substantially decreasing the temperature and is compression-molded by the male mold.

In order to impart heat resistance to the mouth-and-neck portion of the preform obtained as described above, the mouth-and-neck portion is whitened by crystallization through the heat treatment in the stage of preform.

The mouth-and-neck portion of the biaxially drawn portion may be whitened by crystallization after the biaxial draw-blow molding.

EXAMPLES

[Example 1]

A mouth portion of a preform made of a polyethylene terephthalate resin was crystallized (whitened) by a suitable means and, then, the preform was heated at 115°C which was higher than the glass transition point thereof. The preform was, then, biaxially draw-blow-molded into drawing ratios of 2.8 times in the longitudinal direction, 2.8 times in the transverse direction and 7.8 times in terms of an area by using the primary metal mold heated at 160°C at the portions corresponding to the barrel portion and the bottom portion to obtain a primary intermediate molded article of a circular shape in cross section having a barrel diameter of 100 mm and a height of 100 mm larger than the final polyester container.

Next, the primary intermediate molded article was heated in an oven so that the surface temperature was 180°C on an average so as to be thermally contracted to thereby obtain a secondary intermediate molded article of a circular shape in cross section having a thickness ($t_1$) in the barrel portion of 0.5 mm (position 45 mm below the neck), a barrel diameter of 65 mm and a height of 90 mm.

Then, the secondary intermediate molded article was biaxially draw-blow-molded into 1.01 times in the longitudinal direction, 1.04 times in the transverse direction and 1.05 times in terms of the area by using a secondary metal mold heated at 150°C at a portion corresponding to at least the barrel portion 4, and was heat-set at the shoulder portion 3, barrel portion and bottom portion except the mouth portion 2 for 3 seconds, in order to obtain a wide-mouthed heat-resistant polyester container illustrated in Fig. 1 having a thickness ($t_2$) in the pole portions 7 among the panels 6 of 0.45 mm (position 45 mm below the neck) (thickness reduction ratio = ($t_1$ - $t_2$)/$t_2$ x 100 = 5%), a barrel diameter of 70 mm and a height of 95 mm.

In taking out the polyester container from the secondary metal mold, further, the cooling blow was effected to blow the air of 25°C into the container for one second.

[Example 2]

A polyester container was produced in the same manner as in Example 1 with the exception of heating the secondary metal mold at a temperature of 160°C and selecting the drawing ratios in the biaxial draw-blow molding to be 1.1 times in the longitudinal direction, 1.18 times in the transverse direction and 1.3 times in terms of the area.

[Example 3]

A mouth portion of a preform made of a polyethylene terephthalate resin was crystallized (whitened) by a suitable means and, then, the preform was heated at 105°C which was higher than the glass transition point thereof. The preform was, then, biaxially draw-blow-molded into drawing ratios of 2.8 times in the longitudinal direction, 3.5 times in the transverse direction and 9.8 times in terms of an area by using the primary metal mold heated at 130°C at the portion corresponding to the barrel portion and at 90°C at the portion corresponding to the bottom portion to obtain a primary intermediate molded article of a circular shape in cross section having a barrel diameter of 85 mm and a height of 210 mm larger than the final polyester container.

Next, the primary intermediate molded article was heated in an oven so that the surface temperature was 180°C on an average so as to be thermally contracted to thereby obtain a secondary intermediate molded article of a circular shape in cross section having a thickness ($t_1$) in the barrel portion of 0.48 mm (position 80 mm below the neck), a barrel diameter of 56 mm and a height of 158 mm.

Then, the secondary intermediate molded article was biaxially draw-blow-molded into 1.03 times in the longitudinal direction, 1.17 times in the transverse direction and 1.2 times in terms of the area by using a secondary metal mold heated at 180°C at portions corresponding to at least the barrel portions 24a, 24b, and was heat-set at the shoulder portion 23, barrel portion 24 and bottom portion 25 except the mouth portion 22 for 2 seconds, in order to obtain a bottle-like heat-resistant polyester container illustrated in Fig. 3 having a thickness ($t_2$) in the pole portions 37 among the panels 26 of 0.38 mm (position 80 mm below the neck) (thickness reduction ratio = ($t_1$ - $t_2$)/$t_2$ x 100 = 20%), a barrel diameter of 70 mm and a height of 165 mm.

In taking out the polyester container from the secondary metal mold, further, the cooling blow was effected to blow the air of 25°C into the container for 0.8 seconds.

[Example 4]

A polyester container was produced in the same manner as in Example 3 with the exception of heating the secondary metal mold at a temperature of 210°C and selecting the drawing ratios in the biaxial draw-blow molding to be 1.1 times in the longitudinal direction, 1.09 times in the transverse direction and 1.1 times in terms of the area.

[Comparative Example 1]

A polyester container was produced in the same manner as in Example 1 with the exception of heating the secondary metal mold at a temperature of 130°C and selecting the drawing ratios in the biaxial draw-blow molding to be 1 time in the longitudinal direction, 1.02 times in the transverse direction and 1.02 times in terms of the area.

[Comparative Example 2]

A polyester container was produced in the same manner as in Example 3 with the exception of heating the secondary metal mold at a temperature of 140°C and selecting the drawing ratios in the biaxial draw-blow molding to be 1.01 times in the longitudinal direction, 1.02 times in the transverse direction and 1.03 times in terms of the area.

(Evaluation)

[Coefficient of Contraction]

Test pieces having a gauge length of 20 mm and a width of 3 mm as shown in Fig. 4 were cut out from the pole portions among the reduced pressure-absorbing panels in the barrel portions of the polyester containers, and were put to the TMA measurement.

By using a dynamic viscosity measuring apparatus (DMS-6100, Seiko Instruments Inc.), the test pieces were put to the TMA measurement under a pre-loading of 0 (N) on the test pieces and under a condition of elevating the temperature at a rate of 3°C/min.

In Fig. 5, the X-axis represents the temperature (°C) of the test piece, and the Y-axis represents the coefficient of contraction of the test piece. The coefficient of contraction at 30°C was set to be 0%, and the temperature T at a moment when the coefficient of contraction was 0.66% was confirmed from the amount of contraction/gauge length.

The results were as shown in Table 1.

[Heat Resistance]

Polyester containers were filled with coffee with milk maintained at 25°C, sealed with plastic screw caps made of a polypropylene, and were retort-sterilized at 120°C for 30 minutes. Table 1 illustrates the coefficients of contraction of the containers.

Table 1

|  | Temperature of secondary metal mold (°C) | Drawing ratio of secondary metal mold (longi X trans. = area) | Thickness reduction ratio (%) | Evaluation | | |
|---|---|---|---|---|---|---|
|  |  |  |  | Temperature T of when the ratio of contraction becomes 0.66% | Heat resistance (volume ratio of contraction %) | Moldability (reduced pressure-absorbing panels, pole portions, etc.) |
| Ex. 1 | 150 | 1.01x1.04=1.05 | 5 | 128.1 | 1.8 | good |
| Ex. 2 | 160 | 1.1 x1.18=1.3 | 30 | 123.7 | 2 | good |
| Ex. 3 | 180 | 1.03x1.17=1.2 | 20 | 150.3 | 1.5 | good |
| Ex. 4 | 210 | 1.01x1.09=1.1 | 10 | 201.8 | 0.8 | good |

|  | Temperature of secondary metal mold (°C) | Drawing ratio of secondary metal mold (longi X trans. = area) | (continued) Thickness reduction ratio (%) | Evaluation | | |
|---|---|---|---|---|---|---|
|  |  |  |  | Temperature T of when the ratio of contraction becomes 0.66% | Heat resistance (volume ratio of contraction %) | Moldability (reduced pressure-absorbing panels, pole portions, etc.) |
| Comp. Ex. 1 | 130 | 1 x 1.02=1.02 | 2 | 102.3 | 9.6 | reduced pressure-absorbing panels were poorly molded and the article was nipped by the mold |
| Comp. Ex. 2 | 140 | 1.01x1.02=1.03 | 3 | 116.8 | 3.9 | reduced pressure-absorbing panels were poorly molded and the article was nipped by the mold |

Industrial Applicability

The heat-resistant polyester container of the present invention exhibits excellent heat resistance and can be put to the retort-sterilization processing at high temperatures after having been filled with foods or beverages and sealed. In particular, the heat-resistant polyester container of the invention is suited for retort-sterilizing such foods as infant's foods or beverages such as coffee with milk at high temperatures of not lower than 100°C and, particularly, at 120°C for 20 to 50 minutes.

According to the production method of the present invention, further, it is allowed to easily produce a polyester container having a greatly improved heat resistance as compared to the conventional polyester containers.

**Claims**

1. A method of producing a heat-resistant polyester container (1) by biaxially draw-blow-molding a preform (10) of a polyester resin by using a primary metal mold to obtain a primary intermediate molded article (11), contracting the primary intermediate molded article by heating to obtain a secondary intermediate molded article (12), and biaxially draw-blow-molding the second intermediate molded article at a drawing ratio of 1.05 to 1.3 times in terms of an area ratio and heat-setting the secondary intermediate molded article for 1 to 5 seconds by using a secondary metal mold heated at 150 to 210°C, so that the thickness reduction ratio of the barrel portion (4) expressed by the following formula (2) is 5% to 30%,

$$\text{Thickness reduction ratio (\%)} = \{(t_1 - t_2)/t_2\} \times 100 \quad --- (2)$$

wherein $t_1$ is a thickness of the barrel portion of the secondary intermediate molded article, and $t_2$ is a thickness of the barrel portion of the polyester container which is the molded article.

2. A method of producing a heat-resistant polyester container (1) according to claim 1, wherein the polyester container has reduced pressure-absorbing panels (6) in the barrel portion (4), and the thickness reduction ratio is a value in the pole portions (7) among the reduced pressure-absorbing panels formed in the barrel portion.

**Patentansprüche**

1. Verfahren zur Herstellung eines hitzebeständigen Polyesterbehälters (1) durch biaxiales Ziehen und Blasformen einer Vorform (10) aus einem Polyesterharz unter Verwendung einer primären Metallform, um einen primären Zwischenformgegenstand (11) zu erzielen, Schrumpfen des primären Zwischenformgegenstandes (11) durch Erhitzen, um einen sekundären Zwischenformgegenstand (12) zu erzielen, und biaxiales Zieh-Blasformen des sekundären Zwischenformgegenstandes bei einem Ziehverhältnis vom 1,05 fachen bis zum 1,3 fachen in Bezug auf ein Flächenverhältnis, und Wärmehärten des sekundären Zwischenformgegenstandes für 1 bis 5 Sekunden unter Verwendung einer sekundären Metallform, die auf 150 bis 210 °C erhitzt wird, so dass das Verhältnis der Dickereduktion des Zylinderabschnitts (4), das durch die folgende Formel (2) ausgedrückt wird, 5 bis 30 % beträgt,

$$\text{Verhältnis der Dickereduktion (\%)} = \{(t_1-t_2)/t_2\} \times 100, (2)$$

wobei $t_1$ eine Dicke des Zylinderabschnitts des sekundären Zwischenformgegenstandes ist und $t_2$ eine Dicke des Zylinderabschnittes des Polyesterbehälters ist, welcher der Formgegenstand ist.

2. Verfahren zur Herstellung eines hitzebeständigen Polyesterbehälters (1) gemäß Anspruch 1, wobei der Polyesterbehälter im Zylinderabschnitt (4) reduzierte druckabsorbierende Elemente (6) aufweist und das Verhältnis der Dickereduktion ein Wert in den Stegabschnitten (7) zwischen den reduzierten druckabsorbierenden Elementen ist, die im Zylinderabschnitt gebildet sind.

**Revendications**

1. Procédé de production d'un conteneur en polyester résistant à la chaleur (1) par moulage par étirage-soufflage biaxial d'une ébauche (10) d'une résine de polyester en utilisant un moule de métal principal pour obtenir un article moulé intermédiaire principal (11) en contractant l'article moulé intermédiaire principal par chauffage, pour obtenir un article moulé intermédiaire secondaire (12), et par moulage par étirage-soufflage biaxial de l'article moulé intermédiaire secondaire dans un rapport d'étirage de 1,05 à 1,3 fois, en termes de rapport de surfaces, et par fixation à chaud de l'article moulé intermédiaire secondaire pendant 1 à 5 secondes en utilisant un moule de métal secondaire chauffé à une température de 150 à 210 °C, de sorte que le rapport de réduction d'épaisseur de la portion de cylindre (4) exprimée par la formule (2) qui suit soit de 5 % à 30 %

$$\text{Rapport de réduction d'épaisseur}$$
$$(\%) = \{(t_1-t_2)/t_2\} \times 100 \qquad (2)$$

où $t_1$ est une épaisseur de la portion de cylindre de l'article moulé intermédiaire secondaire, et $t_2$ est une épaisseur de la portion de cylindre du conteneur de polyester qui est l'article moulé.

2. Procédé de production d'un conteneur de polyester résistant à la chaleur (1) selon la revendication 1, dans lequel le conteneur de polyester a des panneaux d'absorption de pression réduite (6) dans la portion de cylindre (4), et le rapport de réduction d'épaisseur est une valeur dans les portions polaires (7) parmi les panneaux d'absorption de pression réduite formés dans la portion de cylindre.

# Fig. 1

# Fig. 2

# Fig. 3

# Fig. 4

LOCKING PORTIONS

GAUGE LENGTH = 20mm

* WIDTH AND THICKNESS
ARE ARBITARY

## Fig. 5

RESULTS OF TMA MEASUREMENT

**EP 1 495 853 B1**

**REFERENCES CITED IN THE DESCRIPTION**

**Patent documents cited in the description**

- JP 7067732 A
- US 5445784 A
- JP 2001150522 A
- EP 1155807 A